# EUROPÄISCHE PATENTANMELDUNG

(11) **EP 1 897 726 A2**
(43) Veröffentlichungstag der Anmeldung: **12.03.2008**
(21) Anmeldenummer: 07015445.5
(22) Anmeldetag: 07.08.2007
(51) Int. Cl.: B60J 7/12

(54) **Verstellbares Dach**

(30) Priorität: 08.09.2006 DE 102006042287
(71) Anmelder: Dr.Ing. h.c. F. Porsche Aktiengesellschaft, 70435 Stuttgart (DE)
(72) Erfinder: Fröschle, Mathias, 73760 Ostfildern (DE)

(57) **Zusammenfassung**

Die Erfindung betrifft ein verstellbares Dach in einem Fahrzeug, insbesondere Faltverdeck in einem Kraftfahrzeug, mit einem vorderen ersten Dachabschnitt (12) zum Verbinden mit dem Rahmen der Windschutzscheibe des Fahrzeugs, einem nachgeordneten zweiten Dachabschnitt (14), zwei beiderseits der Fahrzeugmitte angeordneten, die Dachabschnitte (12, 14) miteinander verbindenden Lenkeranordnungen (16) aus mindestens zwei Lenkern (18, 20), welche die beiden Dachabschnitte (12, 14) derart miteinander koppeln, dass sich der erste Dachabschnitt (12) beim Schließen oder Öffnen des Daches (10) über den zweiten Dachabschnitt (14) bewegt, und beiderseits der Fahrzeugmitte in karosseriefesten Lagern (28) gelagerten Dachlenkeranordnungen (22), die an dem zweiten Dachabschnitt (14) angelenkt sind, wobei jede Dachlenkeranordnung (22) mit einem Lenker (20) der auf der gleichen Fahrzeugseite angeordneten Lenkeranordnung (16) zum Verstellen der Dachabschnitte (12, 14) gekoppelt ist. Jede Dachlenkeranordnung (22) weist zum Koppeln mit der zugeordneten Lenkeranordnung (16) der Dachabschnitte (12, 14) einen angelenkten Koppellenker (34) auf, welcher zumindest mit einem der Lenker (20) der Lenkeranordnung (16) gekoppelt ist.

## Beschreibung

Die Erfindung betrifft ein verstellbares Dach in einem Fahrzeug nach dem Oberbegriff des Anspruchs 1.

Ein verstellbares Dach der eingangs genannten Art ist beispielsweise aus der DE 196 13 356 C2 bekannt. Bei diesem Dach sind zwei Dachabschnitte vorgesehen, welche an ihren Seiten durch zwei Lenkeranordnungen derart miteinander gekoppelt sind, dass die Dachabschnitte beim Schließen des Daches hintereinander angeordnet und beim Öffnen des Daches aufeinander abgelegt werden. Der hintere Dachabschnitte wird durch zwei beidseitig der Fahrzeugmitte symmetrisch zueinander angeordnete Dachlenkeranordnungen getragen, welche in karosseriefesten Lagern gelagert an dem zweiten Dachabschnitt angelenkt sind, wobei jede Dachlenkeranordnung mit einem Lenker der Lenkeranordnung zum Verstellen der Dachrahmen gekoppelt ist.

Ausgehend von diesem Stand der Technik ist es Aufgabe der Erfindung, ein verstellbares Dach anzugeben, das insbesondere einfach aufgebaut und zu montieren ist.

Erfindungsgemäß wird diese Aufgabe durch ein verstellbares Dach mit den Merkmalen nach Anspruch 1 gelöst. Bevorzugte Ausführungsformen sind Gegenstand der Unteransprüche.

Bei dem erfindungsgemäßen Dach sind die Dachlenkeranordnungen nicht unmittelbar, sondern durch Zwischenschalten jeweils eines zusätzlichen Koppellenkers mit der jeweils zugeordneten Lenkeranordnung der Dachabschnitte gekoppelt. Durch das Zwischenschalten des Koppellenkers ist das Montieren des Daches verglichen mit dem Stand der Technik vereinfacht, da der Koppellenker als zusätzliches Element einfach an die jeweilige Einbaulage angepasst werden kann. Darüber hinaus ermöglicht die Verwendung der Koppellenker als Verbindungselement zwischen den Lenkeranordnungen der Dachabschnitte und den Dachlenkeranordnungen, dass an einen Typ Dachlenkeranordnung unterschiedliche Typen von Dachabschnitten mit ihren Lenkeranordnungen angebracht werden können, wobei ein Anpassen der Dachlenkeranordnungen an unterschiedliche Lenkeranordnungen entfallen kann, da die funktionelle Verbindung durch die variabel gestaltbaren Koppellenker erfolgt.

Als verstellbare Dächer werden in diesem Zusammenhang sowohl Dächer aus steifen Dachabschnitten, welche durch Lenkeranordnungen relativ zueinander verstellbar und miteinander verbindbar sind, als auch herkömmliche Faltverdecke verstanden, die in einzelne, durch Lenkeranordnungen miteinander gekoppelte Dachabschnitte untergliedert sind, welche zumindest abschnittsweise mit einem faltbaren Verdeckmaterial, beispielsweise einem Verdeckstoff, versehen sind. Die einzelnen Dachabschnitte können als verwindungssteife Dachelemente, wie Hardtopsegmente, ausgebildet sein. Denkbar ist jedoch auch, die Dachabschnitte in Form von geschlossenen oder gegebenenfalls teilweise offenen Rahmen auszubilden, welche beispielsweise mit einem Verdeckmaterial bespannt sind. Auch Dächer, kombiniert aus verwindungssteifen Dachelementen und bespannten Dachrahmen, werden in diesem Zusammenhang als verstellbare Dächer verstanden.

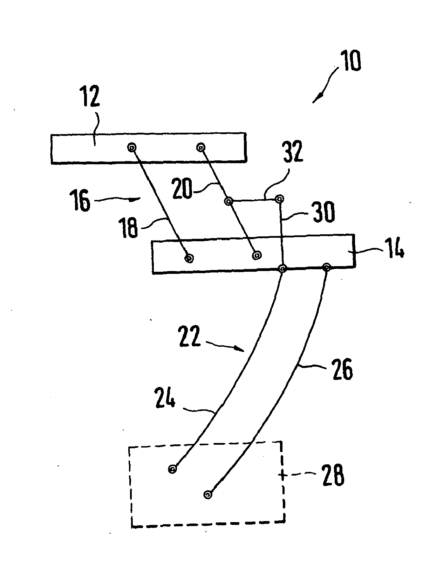

Weitere Vorteile und Vorzüge der Erfindung ergeben sich aus der nachfolgenden Beschreibung sowie der Zeichnung.

Vorzugsweise sind die die beiden Dachabschnitte verbindenden Lenkeranordnungen als Parallelogrammlenkeranordnung ausgebildet. Durch Verwendung von Parallelogrammlenkeranordnungen ist das Anheben und Absenken der Dachabschnitte auf einfache und elegante Weise möglich, während gleichzeitig auch die Ansteuerung der Lenkeranordnungen auf einfache Weise erfolgen kann. So wird bei dieser Ausführungsform ferner vorgeschlagen, den Koppellenker mit dem aus Richtung des Fahrzugbugs gesehen hinteren der beiden Lenker der Parallelogrammlenkeranordnung durch ein Gelenk zu koppeln. Auf diese Weise ist ein direktes Ansteuern der Parallelogrammlenkeranordnung möglich, ohne dass die Lenker in ihrem Verlauf so abgewinkelt und gekröpft sein müssen, dass sich die Lenker bei einem Absenken des Daches nicht gegenseitig behindern.

Bei einer bevorzugten Ausführungsform des erfindungsgemäß verstellbaren Daches weist jede Dachlenkeranordnung einen Dachlenker und einen Hauptlenker auf, die beide an dem zweiten Dachabschnitt angelenkt sind. Zum Ankoppeln der Dachlenkeranordnung ist an dem Dachlenker eine Verlängerung vorgesehen, die sich über das Gelenk am zweiten Dachabschnitt hinaus erstreckt, mit dem der Dachlenker am zweiten Dachabschnitt angelenkt ist, und an welcher der mit der Lenkeranordnung gekoppelte Koppellenker angelenkt ist. Durch Verwendung der Verlängerung ist ein besonders exaktes Ansteuern des Koppellenkers und damit ein besonders exaktes Zueinanderbewegen der einzelnen Dachabschnitte möglich, da auch hier die Verlängerung an die jeweiligen baulichen Gegebenheit auf einfache Weise angepasst werden kann.

Die Dachlenker bilden bei dieser Ausführungsform bei geschlossenem Dach vorzugsweise die B-Säulen des Fahrzeugs und sind entsprechend steif ausgebildet, so dass auch die beim Verlagern der Dachabschnitte zusätzlich entstehenden Torsions- und Biegekräfte von den Dachlenkern problemlos aufgenommen werden können.

Die beiden Dachlenkeranordnungen sind vorzugsweise durch mindestens einen quer zur Fahrzeuglängsachse verlaufenden Spriegel miteinander verbunden und bilden so einen dritten Dachabschnitt. Hierdurch wird die Steifigkeit des gesamten Daches zusätzlich erhöht, wobei auch die Kopplung zwischen den Dachlenkeranordnungen und den Lenkeranordnungen der Dachabschnitte aufgrund der hierdurch verminderten Verwindungen des gesamten Dachaufbaus besonders störungsfrei ist.

Ferner wird vorgeschlagen, dass mindestens eine der Dachlenkeranordnungen zum Ansteuern eines schwenkbaren Heckscheibenträgers und/oder zum Ansteuern eines schwenkbar gelagerten Spannbügels mit diesem bzw. mit diesen gekoppelt ist. Hierdurch ist der erforderliche Steuerungsaufwand minimiert, da sämtliche beweglichen Komponenten des verstellbaren Daches zentral durch die Dachlenkeranordnungen angesteuert und betätigt werden.

Nachfolgend wird die Erfindung anhand eines Ausführungsbeispieles unter Bezugnahme auf die Zeichnung näher erläutert. Darin zeigt die einzige Figur in schematischer Seitenansicht einen Ausschnitt eines erfindungsgemäßen verstellbaren Daches.

In der einzigen Fig. ist in schematischer Seitenansicht ein Ausschnitt eines erfindungsgemäßen verstellbaren Daches 10 gezeigt. Das Dach 10 weist einen aus Richtung des Fahrzeugbugs gesehen vorderen Dachabschnitt 12 und einen dahinter angeordneten hinteren Dachabschnitt 14 auf, welche durch beiderseits der Fahrzeugmitte symmetrisch angeordnete Lenkeranordnungen 16 miteinander gekoppelt sind.

Jede Lenkeranordnung 16 ist durch zwei etwa parallel zueinander verlaufende Lenker 18 und 20 gebildet, welche an den beiden Dachabschnitten 12 und 14 angelenkt und in Form eines Parallelogramms verstellbar sind. Die Längen und der Verlauf der Lenker 18 und 20 sind dabei so gewählt, dass die Dachabschnitte 12 und 14 bei geschlossenem Dach 10 bündig an der Oberseite und Unterseite ineinander übergehen und beim Absenken oder Ausfahren des Daches 10 der vordere Dachabschnitt 12 über den hinteren Dachabschnitt 14 hinwegbewegt wird.

Die beiden Dachabschnitte 12 und 14 werden von zwei beiderseits der Fahrzeugmitte symmetrisch zueinander angeordneten Dachlenkeranordnungen 22 getragen. Jede Dachlenkeranordnung 22 ist im dargestellten Ausführungsbeispiel aus zwei Lenkern gebildet, einem Dachlenker 24 und einem Hauptlenker 26, die als Viergelenk mit ihren Enden am hinteren Dachabschnitt 14 und mit ihren unteren Enden an einem Dachlager 28 angelenkt sind.

Das obere Ende jedes Dachlenkers 24 hat eine Verlängerung 30, die sich über das Gelenk 32, mit dem der Dachlenker 24 am hinteren Dachabschnitt 14 angelenkt ist, hinaus erstreckt, wie die in der einzigen Fig. gezeigte halb ausgefahrene Stellung des Daches 10 zeigt. Das freie Ende der Verlängerung 30 ist über ein Gelenk mit dem einen Ende eines Koppellenkers 34 gekoppelt, welcher seinerseits mit seinem anderen Ende durch ein Gelenk mit den hinteren Lenker 20 der Lenkeranordnung 16 gekoppelt ist.

Bei Verstellen des Daches 10 wird nun durch die Kopplung des Dachlenkers 24 über die Verlängerung 30 und den Koppellenker 34 die Bewegung des Dachlenkers 24 unmittelbar auf den hinteren Lenker 20 und damit auf die gesamte Lenkeranordnung 16 übertragen. Dabei wird durch die Gelenke zwischen dem Koppellenker 34 und der Verlängerung 30 sowie zwischen dem hinteren Dachabschnitt 14 und dem Dachlenker 24 sichergestellt, dass bei geschlossenem Dach 10 sämtliche Lenker 18, 20 und 34 entlang der Dachkanten verlaufen.

Durch die erfindungsgemäße Ansteuerung der Dachabschnitte 12 und 14 unter Verwendung des Koppellenkers 34 ist ein besonders störungsfreier und einfacher Bewegungsablauf beim Öffnen und Schließen des Daches 10 ermöglicht.

### Bezugszeichenliste

- 10: Dach
- 12: vorderer Dachabschnitt
- 14: hinterer Dachabschnitt
- 16: Lenkeranordnungen
- 18: vordere Lenker
- 20: hintere Lenker
- 22: Dachlenkeranordnungen
- 24: Dachlenker
- 26: Hauptlenker
- 28: Dachlager
- 30: Verlängerung
- 32: Koppellenker

## Patentansprüche

1. Verstellbares Dach in einem Fahrzeug, insbesondere Faltverdeck in einem Kraftfahrzeug, mit einem vorderen ersten Dachabschnitt (12) zum Verbinden mit dem Rahmen der Windschutzscheibe des Fahrzeugs, einem nachgeordneten zweiten Dachabschnitt (14), zwei beiderseits der Fahrzeugmitte angeordneten, die Dachabschnitte (12, 14) miteinander verbindenden Lenkeranordnungen (16) aus mindestens zwei Lenkern (18, 20), welche die beiden Dachabschnitte (12, 14) derart miteinander koppeln, dass sich der erste Dachabschnitt (12) beim Schließen oder Öffnen des Daches (10) über den zweiten Dachabschnitt (14) bewegt, und beiderseits der Fahrzeugmitte in karosseriefesten Lagern (28) gelagerten Dachlenkeranordnungen (22), die an dem zweiten Dachabschnitt (14) angelenkt sind, wobei jede Dachlenkeranordnung (22) mit einem Lenker (20) der auf der gleichen Fahrzeugseite angeordneten Lenkeranordnung (16) zum Verstellen der Dachabschnitte (12, 14) gekoppelt ist, **dadurch gekennzeichnet, dass** jede Dachlenkeranordnung (22) zum Koppeln mit der zugeordneten Lenkeranordnung (16) der Dachabschnitte (12, 14) einen angelenkten Koppellenker (34) aufweist, welcher zumindest mit einem der Lenker (20) der Lenkeranordnung (16) gekoppelt ist.

2. Verstellbares Dach nach Anspruch 1, **dadurch gekennzeichnet, dass** die die beiden Dachabschnitte (12, 14) verbindenden Lenkeranordnungen als Parallelogrammlenkeranordnung (16) ausgebildet sind.

3. Verstellbares Dach nach Anspruch 2, **dadurch gekennzeichnet, dass** der Koppellenker (34) mit dem aus Richtung des Fahrzugbugs gesehen hinteren der beiden Lenker (20) der Parallelogrammlenkeranordnung (16) durch ein Gelenk gekoppelt ist.

4. Verstellbares Dach nach Anspruch 1, 2 oder 3, **dadurch gekennzeichnet, dass** jede Dachlenkeranordnung (22) einen Dachlenker (24) und einen Hauptlenker (26) aufweist, die beide an dem zweiten Dachabschnitt (14) angelenkt sind, und dass an einem der Lenker der Dachlenkeranordnung (22), vorzugsweise dem Dachlenker (24), eine Verlängerung (30) vorgesehen ist, die sich über das Gelenk am zweiten Dachabschnitt (14) hinaus erstreckt, und dass der mit der Lenkeranordnung (16) gekoppelte Koppellenker (34) an der Verlängerung (30) angelenkt ist.

5. Verstellbares Dach nach Anspruch 4, **dadurch gekennzeichnet, dass** die Dachlenker (24) bei geschlossenem Dach (10) die B-Säulen des Fahrzeugs bilden.

6. Verstellbares Dach nach einem der vorhergehenden Ansprüche, **dadurch gekennzeichnet, dass** die beiden Dachlenkeranordnungen (22) durch mindestens einen quer zur Fahrzeuglängsachse verlaufenden Spriegel miteinander verbunden sind und einen dritten Dachabschnitt bilden.

7. Verstellbares Dach nach einem der vorhergehenden Ansprüche, **dadurch gekennzeichnet, dass** mindestens eine der Dachlenkeranordnungen (22) zum Ansteuern eines schwenkbaren Heckscheibenträgers mit diesem gekoppelt ist.

8. Verstellbares Dach nach einem der vorhergehenden Ansprüche, **dadurch gekennzeichnet, dass** mindestens einer der Dachlenkeranordnungen (22) zum Ansteuern eines schwenkbar gelagerten Spannbügels mit diesem gekoppelt ist.

9. Kraftfahrzeug mit wenigstens einem als Brennkraftmaschine ausgebildeten Antriebsmotor, der über ein Getriebe wenigstens eine Achse antreibt, **dadurch gekennzeichnet, dass** es ein verstellbares Dach nach wenigstens einem der Ansprüche 1 bis 8 aufweist. ,
